# EUROPÄISCHE PATENTSCHRIFT

(11) **EP 1 501 389 B1**
(45) Veröffentlichungstag und Bekanntmachung des Hinweises auf die Patenterteilung: **06.06.2007**
(21) Anmeldenummer: 03727289.5
(22) Anmeldetag: 11.04.2003
(51) Int. Cl.: A47C 7/46, B60N 2/66

(54) **SITZEINLAGE UND VERFAHREN ZU IHRER HERSTELLUNG**
SEAT INSERT AND METHOD FOR PRODUCING THE SAME
GARNITURE DE SIEGE ET SON PROCEDE DE PRODUCTION

(30) Priorität: 04.05.2002 DE 10220028
(43) Veröffentlichungstag der Anmeldung: 02.02.2005
(73) Patentinhaber: Schwarzbich, Jörg, 33615 Bielefeld (DE)
(72) Erfinder: SCHWARZBICH, Jörg, 33615 Bielefeld (DE); RUTSCH, Hermann, W., 33129 Delbrück (DE)
(74) Vertreter: Wiebusch, Manfred
(86) Internationale Anmeldenummer: PCT/EP2003/003757
(87) Internationale Veröffentlichungsnummer: WO 2003/092440

(56) Entgegenhaltungen:
- EP-A- 0 780 262
- WO-A-01/10670
- DE-A- 10 110 138
- DE-A- 19 826 597

## Beschreibung

Die Erfindung betrifft eine Sitzeinlage in der Form einer elastischen Gittermatte mit mindestens zwei Längsstäben, die durch Querstäbe verbunden sind und Aufhänger für die Aufhängung in einem Sitzgestell aufweisen, sowie ein Verfahren zur Herstellung einer solchen Sitzeinlage.

In der Rückenlehne von Sitzen, insbesondere von Kraftfahrzeugsitzen, ist häufig als Sitzeinlage eine Gittermatte eingebaut, die die Polsterung geeignet versteift, jedoch ein gewisses Nachgeben und damit eine Anpassung an die Körperform und -haltung des Benutzers ermöglicht. Diese Gittermatte wird üblicherweise durch ein Drahtgitter gebildet, das mit Druck- oder Zugfedern so im Rahmen der Rückenlehne aufgehängt ist, daß die Längsstäbe im wesentlichen vertikal in der Ebene der Rückenlehne verlaufen. Die Längsstäbe werden zumeist durch Federstahldrähte gebildet, die mit Kunststoff ummantelt sind. Die aus dünneren Drähten bestehenden Querstäbe sind an den Enden zu Ösen gebogen, die die Längsstäbe eng umschlingen und so zur Befestigung der Querstäbe an den Längsstäben dienen.

Oft ist an der Gittermatte zusätzlich eine wölbungsverstellbare Lordosenstütze befestigt, die es ermöglicht, die Kontur der Rückenlehne noch besser an die Anatomie des Benutzers anzupassen und der Wirbelsäule des Benutzers besseren Halt zu geben. Ein Stützelement der Lordosenstütze wird durch eine mehr oder minder stark durchbrochene Platte aus Kunststoff gebildet, deren obere und untere Ränder mit Hilfe eines Bowdenzuges zusammengezogen werden können, so daß die Platte sich durchbiegt und dadurch ihre Wölbung verändert. Das Stützelement ist im Bereich seiner oberen und unteren Ränder an den Querstäben der Gittermatte befestigt, wie zum Beispiel in EP-A-0 780 262 beschrieben wird.

Aufgabe der Erfindung ist es, eine Sitzeinlage zu schaffen, die sich einfacher herstellen und in ihren elastischen Eigenschaften optimieren läßt.

Diese Aufgabe wird erfindungsgemäß dadurch gelöst, daß die Querstäbe aus Kunststoff bestehen und an die Längsstäbe angespritzt sind.

Durch die Erfindung erübrigt sich die bisher sehr umständliche Befestigung der durch dünne Drähte gebildeten Querstäbe an den Längsstäben. Statt dessen werden die aus Kunststoff bestehenden Querstäbe nun einfach an die Längsstäbe angespritzt, so daß sich die gesamte Gittermatte in einem Zuge im Spritzgießverfahren herstellen läßt. Auf diese Weise wird der Herstellungsprozeß beträchtlich vereinfacht.

Zugleich bietet die Erfindung die vorteilhafte Möglichkeit, die Form und die elastischen Eigenschaften der Querstäbe so zu variieren, daß die Form und Härte der Gittermatte sowie die Größe der Unterstützungsfläche überall optimal an die Körperanatomie angepaßt wird, so daß der Sitzkomfort gesteigert und eine gesunde Sitzhaltung des Benutzers erreicht wird. Zu diesem Zweck können z. B. die Querstäbe mit einer einheitlichen oder individuell an die jeweilige Einbauhöhe angepaßten Vorwölbung versehen werden. Außerdem können die Querschnittsformen und damit die Größe der Unterstützungsfläche sowie die elastischen Eigenschaften der Querstäbe von Querstab zu Querstab sowie auf der Länge jedes einzelnen Querstabes variiert werden.

Ein besonders zweckmäßiges Verfahren zur Herstellung der Sitzeinlage ist dadurch gekennzeichnet, daß sämtliche Querstäbe in einem Arbeitsgang in einem gemeinsamen Spritzgießwerk gespritzt werden.

Vorteilhafte Ausgestaltungen der Erfindung ergeben sich aus den Unteransprüchen.

Wenn auch die Längsstäbe der Gittermatte aus Kunststoff bestehen, kann die gesamte Gittermatte in einem Stück im Spritzgießverfahren hergestellt werden.

Damit eine ausreichende Gesamtstabilität erreicht wird, sollten die Längsstäbe allerdings eine relativ hohe Biegesteifheit besitzen. Andererseits sollten die Querschnitte der Längsstäbe nicht übermäßig groß werden. Aus diesem Grund wird es als vorteilhaft angesehen, die Längsstäbe aus einem härteren Material als die Querstäbe herzustellen.

Beispielsweise können die Längsstäbe aus faserverstärktem Kunststoff bestehen. In diesem Fall könnte die Gittermatte im Mehrkomponentenverfahren aus Kunststoff gespritzt werden.

Gemäß einer anderen Ausführungsform werden die Längsstäbe wie bisher durch Federstahldrähte gebildet, die zumindest dort, wo sich die Querstäbe anschließen, mit dem Kunststoff der Querstäbe umspritzt sind. Wahlweise können die Federstahldrähte auch ganz in Kunststoff eingebettet werden, so daß es sich erübrigt, die Federstahldrähte in einem gesonderten Herstellungsschritt mit Kunststoff zu ummanteln. Ebenso ist es auch möglich, die aus Kunststoff bestehenden Querstäbe durch eingespritzte Metalldrähte zu versteifen. Diese Metalldrähte können dann nach außen über die Längsstäbe hinaus verlängert sein und zugleich die Aufhänger und/oder Federn, beispielsweise in Mäanderform, für die Aufhängung der Matte im Gestell der Rückenlehne bilden.

Bei der Herstellung der Gittermatte können die als Längsstäbe dienenden Federstahldrähte als Endlosmaterial in das Spritzgießwerk zugeführt, beim Schließen des Werkzeugs mit an den Werkzeughälften angeordneten Schneidorganen auf Länge geschnitten und dann ganz oder teilweise mit Kunststoff umspritzt werden.

Besonders zweckmäßig ist die Verwendung eines Etagenwerkzeugs, in den sich mehrere Gittermatten in einem Arbeitsgang herstellen lassen.

Die Aufhänger, die zum Aufhängen der Gittermatte im Sitzgestell dienen, werden bisher dadurch gebildet, daß die Federstahldrähte zu Haken oder Ösen gebogen werden. Gemäß einer Weiterbildung des erfindungsgemäßen Verfahrens können auch diese Biegevorgänge während des Formschlusses oder nach dem Formschluß mit an dem Spritzgießwerkzeug ausgebildeten Biegewerkzeugen durchgeführt werden.

Alternativ dazu ist es auch möglich, die Aufhänger beim Spritzgießen der Querstäbe aus Kunststoff herzustellen, entweder als Verlängerungen der Querstäbe oder auch an anderer Stelle an den Längsstäben.

Gemäß einer Weiterbildung der Erfindung kann auch das ohnehin aus Kunststoff bestehende Stützelement der Lordosenstütze in einem Arbeitsgang zusammen mit den Querstäben der Gittermatte hergestellt werden. Beispielsweise kann das Stützelement in einem Stück mit den sie tragenden Querstäben ausgebildet werden. Diese Querstäbe müssen dann so elastisch sein, daß sie die bei der Wölbungsverstellung des Stützelements auftretenden Längenänderungen ausgleichen können.

Alternativ ist es denkbar, auf geeigneten, geraden Längsabschnitten der als Federstahldrähte ausgebildeten Längsstäbe Gleitlager anzuordnen, die dann im Spritzgießprozeß mit dem Kunststoff des Stützelements umspritzt werden. Auf diese Weise erhält man eine Gittermatte, bei der zumindest ein Ende des Stützelements gleitend verschiebbar auf den Längsstäben geführt ist. Wenn beide Enden des Stützelements gleitend verschiebbar sind, läßt sich eine sogenannte Vierwege-Lordosenstütze herstellen, bei der das Stützelement nicht nur in der Wölbung, sondern auch in der Höhe relativ zur Gittermatte verstellbar ist.

Für Kraftfahrzeugsitze sind aktive Kopfstützen entwickelt worden, die bei einem Aufprall des Fahrzeugs selbsttätig nach vom schwenken, um den infolge des Aufpralls nach hinten geschleuderten Kopf des Benutzers früher aufzufangen und so ein Schleudertrauma zu verhindern. Die Schwenkbewegung der aktiven Kopfstützen wird durch ein Auslöseelement ausgelöst, das in die Rückenlehne des Sitzes eingebaut ist und auf den vom Oberkörper des Benutzers erzeugten Druck anspricht, wenn dieser bei dem Aufprall in die Rückenlehne gepreßt wird. Das Auslöseelement weist ein Gehäuse oder sonstige Funktionsteile aus Kunststoff auf, die die entsprechenden Sensoren aufnehmen und die ähnlich wie das Stützelement der Lordosenstütze an der Gittermatte zu befestigen sind. Auch dieses Gehäuse und/oder die sonstigen Funktionsteile können gemäß einer Weiterbildung der Erfindung zusammen mit den Querstäben der Gittermatte hergestellt werden.

Im folgenden werden Ausführungsbeispiele der Erfindung anhand der Zeichnung näher erläutert.

Es zeigen:
- Fig. 1: eine Rückansicht einer Gittermatte mit Lordosenstütze:
- Fig. 2: ein Unterwerkzeug einer Vorrichtung zur Herstellung der Gittermatte nach Fig. 1; und

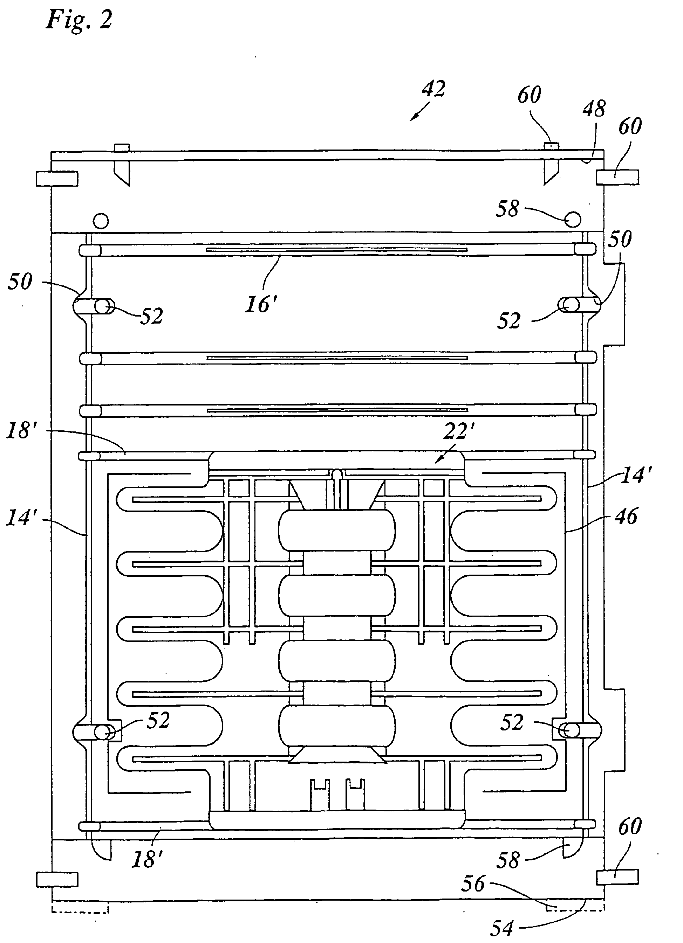

- Fig. 2: eine Gittermatte gemäß einem anderen Ausführungsbeispiel.

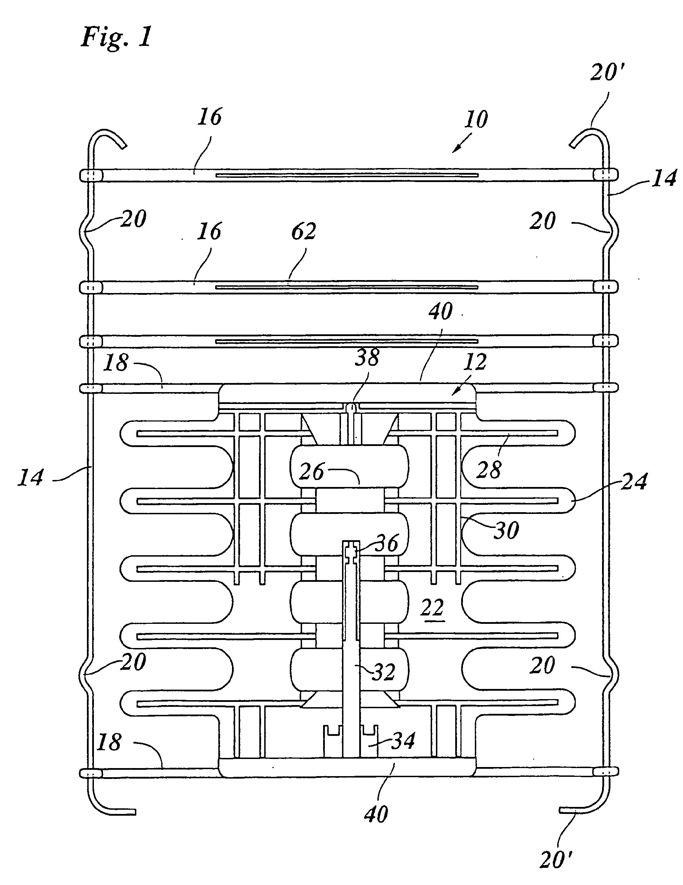

In Figur 1 ist eine Gittermatte 10 mit einer daran befestigten Lordosenstütze 12 gezeigt. Die Gittermatte 10 wird durch zwei an den Enden umgebogene Längsstäbe 14 gebildet, die durch mehrere sprossenartig angeordnete Querstäbe 16, 18 miteinander verbunden sind. Bei den Längsstäben 14 handelt es sich im gezeigten Beispiel um Metalldrähte mit einem verhältnismäßig großen Querschnitt und einer entsprechend hohen Biegesteifheit, während die Querstäbe 16, 18 aus Kunststoff bestehen. Jeder der Längsstäbe 14 weist zwei Ausbiegungen auf, die als Aufhänger 20 für nicht gezeigte Zugfedern dienen, mit denen die Gittermatte 10 so im Rahmen einer Rückenlehne eines Sitzes aufgehängt wird, daß sie im wesentlichen in der Ebene der Rückenlehne in der Polsterung liegt und der Rükkenlehne das geforderte Maß an Steifheit und Nachgiebigkeit verleiht. Weitere Aufhänger 20 werden durch die umgebogenen Enden der Längsstäbe 14 gebildet. Wahlweise können die Längsstäbe auch als gelochte Flachbänder ausgebildet sein, deren Löcher zum Einhängen der Zugfedern dienen.

Die Lordosenstütze 12 weist ein im wesentlichen plattenförmiges Stützelement 22 aus Kunststoff auf, das auf beiden Seiten mehrere seitlich abstehende Finger 24 bildet und in der Mitte mit Durchbrüchen 26 versehen ist. Die Finger 24 sind an der Rückseite durch angeformte Rippen 28 versteift. Durch rechtwinklig zu den Rippen 28 verlaufende, jedoch unterbrochene Rippen 30 wird die Steifheit des Stützelements 22 so eingestellt, daß es sich um eine Querachse elastisch durchbiegen läßt und sich dabei in der Richtung senkrecht zur Zeichenebene in Figur 1 mehr oder minder stark auswölbt. Ein im wesentlichen vertikal verlaufender Hebel 32 ist mittig auf der Rückseite des Stützelements 22 angeordnet und an seinem unteren Ende in einem Lager 34 schwenkbar an dem Stützelement gelagert. Das obere Ende des Hebels 32 bildet eine Verankerungsstelle 36 für das Außenkabel eines nicht gezeigten Bowdenzuges. Eine Verankerungsstelle 38 für das zugehörige Innenkabel ist in der Nähe des oberen Randes des Stützelements 22 angeordnet. Mit Hilfe des Bowdenzuges kann folglich das Stützelement 22 in vertikaler Richtung auf Kompression beansprucht werden, so daß es sich in Richtung auf den Rücken des Benutzers durchwölbt.

Zur Befestigung am Drahtgitter 10 weist das Stützelement an seinen oberen und unteren Rändern je eine Verdickung 40 auf, die in einem Stück mit einem der Querstäbe 18 ausgebildet ist. Auf diese Weise ist das Stützelement 22 stabil und ausreißsicher an der Gittermatte 10 gehalten. Wenn das Stützelement 22 durchgewölbt wird und sich dabei in vertikaler Richtung verkürzt, werden die Querstäbe 18 elastisch durchgebogen.

Zur Herstellung der Gittermatte 10 dient ein Spritzgießwerkzeug, dessen Unterwerkzeug 42 in Figur 2 gezeigt ist.

Das Unterwerkzeug 42 bildet einen Formhohlraum 22', mit dem die in Figur 1 sichtbare Rückseite des Stützelements 22 geformt wird. Die Bereiche des Formhohlraums 22', die die Finger 24 bilden, sind leicht nach oben angewinkelt. Zu diesem Zweck bildet das Unterwerkzeug 42 schräg nach außen ansteigende Plateaus 46. Außerhalb des Formhohlraums 22' und der Plateaus 46 weist das Unterwerkzeug 42 eine flache Oberfläche auf, die von Längsnuten 14' und von Formhohlräumen 16'. 18' für die Querstäbe durchzogen ist. Die Längsnuten 14' sind so tief, daß sie die untere Hälfte des Querschnitts der Längsstäbe 14 aufnehmen können, während die obere Hälfte des Querschnitts durch entsprechende Nuten eines nicht gezeigten Oberwerkzeugs aufgenommen wird.

Die Längsnuten 14' münden am oberen Ende in Figur 2 in einen Freiraum, der durch einen Anschlag 48 begrenzt wird.

Auf ihrer Länge sind die Längsnuten 14' stellenweise zu Schablonen 50 erweitert, denen jeweils ein Biegewerkzeug 52 zugeordnet ist.

Der in Figur 2 untere Rand des Unterwerkzeugs bildet eine Scherkante 54, die in Abstand zu den dortigen Mündungen der Längsnuten 14' liegt und an der die Längsstäbe 14 mit Schneidwerkzeugen 56 abgeschert werden können.

Die Längsstäbe 14 werden zunächst im nicht gebogenen Zustand axial in die Längsnuten 14' eingeführt und gegen den Anschlag 48 geschoben und dann beim Schließen des Werkzeugs abgelängt. Anschließend werden die Biegewerkzeuge 52 nach außen gezogen, so daß die Ausbiegungen für die Aufhänger 20 in den Längsstäben 14 gebildet werden. Die Biegewerkzeuge 52, die derselben Längsnut 14' zugeordnet sind, werden vorzugsweise zeitlich nacheinander betätigt, damit die Längsstäbe 14 sich während des Biegevorgangs axial in den Längsnuten 14 verschieben können, um den durch die Ausbiegungen bedingten Mehrbedarf an Material auszugleichen. Anschließend werden die Enden der Längsstäbe 14 in der in Figur 1 gezeigten Weise umgebogen. Dazu weist das Unterwerkzeug 42 integrierte Biegewerkzeuge 58 und zugehörige Biegestempel 60 auf.

Wenn das Werkzeug geschlossen ist und die Längsstäbe 14 in der gewünschten Weise gebogen worden sind, wird Kunststoffschmelze gleichzeitig in die Formhohlräume 16'. 18' und 22' injiziert, so daß die Querstäbe 16. 18 und das Stützelement 22 hergestellt werden. Die Längsstäbe 14 werden dabei fest in die etwas verdickten Enden der Querstäbe 16, 18 eingebettet. Nach dem Öffnen des Werkzeugs kann die fertige Gittermatte 10 entnommen werden.

In dem in Figur 1 gezeigten Beispiel sind die Querstäbe 16,18 im wesentlichen als flache Bänder ausgebildet, die in der Richtung senkrecht zur Zeichenebene in Figur 1 eine relativ geringe Biegesteifheit haben, so daß sie sich leicht durchbiegen können, wenn sie durch den Rücken des Benutzers belastet werden. Zugleich bilden die Querstäbe so eine relativ breite Stützfläche, durch die ein Einschneiden in das Polstermaterial der Rückenlehne vermieden wird. Die Querstäbe 18, die in einem Stück mit dem Stützelement 22 ausgebildet sind, haben eine geringere Breite als die Querstäbe 16, so daß sie auch in der Richtung parallel zu den Längsstäben 14 elastisch verformbar sind, wenn sich beim Wölben des Stützelements 22 der Abstand zwischen dessen oberen und unteren Rändern verändert.

Das Biegeverhalten der Längsstäbe 16 wird im gezeigten Beispiel dadurch kontrolliert, daß jeweils im Mittelbereich eine Versteifungsrippe 62 angebracht ist.

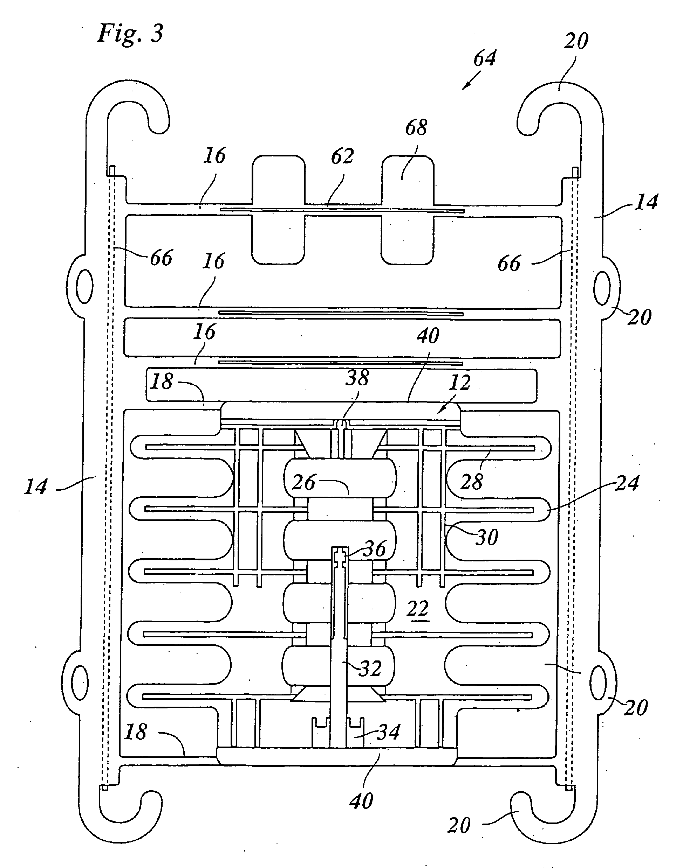

Figur 3 zeigt eine Gittermatte 64 gemäß einem anderem Ausführungsbeispiel. Hier sind auch die Längsstäbe 14 aus Kunststoff hergestellt, und sie bilden zusammen mit den Querstäben 16, 18 und dem Stützelement 22 ein einstückiges Kunststoffteil. Die Längsstäbe 14 haben einen flachen, linsenförmigen Querschnitt und sind durch in das Kunststoffmaterial eingebettete Federstahldrähte 66 versteift. Die Federstahldrähte ragen nur an den Enden aus dem Kunststoffmaterial heraus, so daß sie dort im Formwerkzeug abgestützt werden können.

Die Aufhänger 20 werden hier durch Ösen und Haken gebildet, die unmittelbar an das Kunststoffmaterial der Längsstäbe 14 angeformt sind.

Der obere Querstab 16 weist hier angeformte Lappen 68 auf, die für eine bessere Kräfteverteilung sorgen.

Die wirksame Biegelänge der Querstäbe 16, 18 läßt sich bei dieser Ausführungsform auch dadurch kontrollieren, daß die Breite der Längsstäbe 14 variiert wird. Im gezeigten Beispiel sind die Längsstäbe 14 in dem Abschnitt zwischen dem oberen Querstab 18 und dem sich nach oben anschließenden Querstab 16 nach innen verbreitert. Dies hat insbesondere zur Folge, daß die beiden Querstäbe 18 an den oberen und unteren Rändern des Stützelements 22 unterschiedliche Biegesteifheiten haben. Auf diese Weise läßt sich die Verlagerung des Wölbscheitels beim Durchbiegen des Stützelements 22 kontrollieren.

## Patentansprüche

1. Sitzeinlage in der Form einer elastischen Gittermatte (10; 64) mit mindestens zwei Längsstäben (14), die durch Querstäbe (16, 18) verbunden sind und Aufhänger (20) für die Aufhängung in einem Sitzgestell aufweisen, **dadurch gekennzeichnet, daß** die Querstäbe (16, 18) aus Kunststoff bestehen und an die Längsstäbe (14) angespritzt sind.

2. Sitzeinlage nach Anspruch 1, **dadurch gekennzeichnet, daß** die Längsstäbe (14) zumindest zum Teil aus Metall bestehen.

3. Sitzeinlage nach Anspruch 2, **dadurch gekennzeichnet, daß** die Längsstäbe (14) auf dem größten Teil ihrer Länge mit Kunststoff umspritzt sind.

4. Sitzeinlage nach einem der vorstehenden Ansprüche, **dadurch gekennzeichnet, daß** die Aufhänger (20) aus Kunststoff bestehen.

5. Sitzeinlage nach einem der vorstehenden Ansprüche, **dadurch gekennzeichnet, daß** sie eine Lordosenstütze (12) mit einem durch eine Wölbmechanik (32, 36, 38) wölbbaren Stützelement (22) aufweist, das in einem Stück mit zumindest einem der Querstäbe (18) ausgebildet ist.

6. Sitzeinlage nach einem der vorstehenden Ansprüche, **dadurch gekennzeichnet, daß** die Querstäbe (16, 18) unterschiedliche Formen und/oder Biegesteif heiten haben.

7. Verfahren zur Herstellung einer Sitzeinlage nach einem der vorstehenden Ansprüche, **dadurch gekennzeichnet, daß** sämtliche Querstäbe (16, 18) in einem Stück in einem einzigen Spritzgießwerkzeug (42) hergestellt werden.

8. Verfahren nach Anspruch 7, **dadurch gekennzeichnet, daß** die Längsstäbe (14) als gerade Stäbe, vorzugsweise als Endlosmaterial, in Längsnuten (14') des Spritzgießwerkzeugs (42) eingeschoben werden.

9. Verfahren nach Anspruch 8, **dadurch gekennzeichnet, daß** die Längsstäbe (14) im Spritzgießwerkzeug (42) gebogen werden, wobei ein Teil des Spritzgießwerkzeugs als Biegeschablone (50) dient.

10. Verfahren nach einem der Ansprüche 7 bis 9, **dadurch gekennzeichnet, daß** als Spritzgießwerkzeug (42) ein Etagenwerkzeug benutzt wird, in dem mehrere Gittermatten (10; 64) gleichzeitig hergestellt werden.

## Claims

1. Seat inlay in the form of a resilient lattice-form mat (10; 64) having at least two longitudinal bars (14), which are connected by cross bars (16, 18) and have hangers (20) for suspension in a seat frame, **characterised in that** the cross bars (16, 18) are made of plastics material and are injection-moulded onto the longitudinal bars (14).

2. Seat inlay according to claim 1, **characterised in that** the longitudinal bars (14) are made at least partly of metal.

3. Seat inlay according to claim 2, **characterised in that** plastics material is injection-moulded around the longitudinal bars (14) over the majority of their length.

4. Seat inlay according to any one of the preceding claims, **characterised in that** the hangers (20) are made of plastics material.

5. Seat inlay according to any one of the preceding claims, **characterised in that** it comprises a lordosis support (12) having a support element (22) that is arranged to be bowed by a bowing mechanism (32, 36, 28) and is formed in one piece with at least one of the cross bars (18).

6. Seat inlay according to any one of the preceding claims, **characterised in that** the cross bars (16, 18) have different shapes and/or rigidities.

7. Method for the manufacture of a seat inlay according to any one of the preceding claims, **characterised in that** all cross bars (16, 18) are manufactured in one piece in a single injection-moulding die (42).

8. Method according to claim 7, **characterised in that** the longitudinal bars (14) are inserted as straight bars, preferably in the form of continuous material, into longitudinal channels (14') of the injection-moulding die (42).

9. Method according to claim 8, **characterised in that** the longitudinal bars (14) are bent in the injection-moulding die (42), a part of the injection-moulding die serving as a bending template (50).

10. Method according to any one of claims 7 to 9, **characterised in that** a multi-tier die is used as the injection-moulding die (42), in which a plurality of lattice-form mats (10; 64) are manufactured simultaneously.

## Revendications

1. Garniture de siège sous la forme d'une grille (10 ; 64) élastique avec au moins deux barreaux longitudinaux (14) qui sont reliés par des barreaux transversaux (16, 18) et qui comportent des crochets (20) pour la suspension dans une structure de siège, **caractérisée en ce que** les barreaux transversaux (16, 18) sont en matière plastique et surinjectés sur les barreaux longitudinaux (14).

2. Garniture de siège selon la revendication 1, **caractérisée en ce que** les barreaux longitudinaux (14) sont au moins en partie en métal.

3. Garniture de siège selon la revendication 2, **caractérisée en ce que** les barreaux longitudinaux (14) sont enrobés de matière plastique sur la majeure partie de leur longueur.

4. Garniture de siège selon l'une des revendications précédentes, **caractérisée en ce que** les crochets (20) sont en matière plastique.

5. Garniture de siège selon l'une des revendications précédentes, **caractérisée en ce qu'**elle comporte un soutien lombaire (12) avec un élément de soutien (22) pouvant être bombé par un mécanisme de courbure (32, 36, 38) qui est réalisé d'une pièce avec au moins l'un des barreaux transversaux (18).

6. Garniture de siège selon l'une des revendications précédentes, **caractérisée en ce que** les barreaux transversaux (16, 18) présentent des formes et/ou des rigidités à la flexion différentes.

7. Procédé de fabrication d'une garniture de siège selon l'une des revendications précédentes, **caractérisé en ce que** tous les barreaux transversaux (16, 18) sont fabriqués d'une pièce dans un seul outil de moulage par injection (42).

8. Procédé selon la revendication 7, **caractérisé en ce que** les barreaux longitudinaux (14) sont introduits en tant que barreaux droits, de préférence en un matériau sans fin, dans des rainures longitudinales (14') de l'outil de moulage par injection (42).

9. Procédé selon la revendication 8, **caractérisé en ce que** les barreaux longitudinaux (14) sont cintrés dans l'outil de moulage par injection (42), une partie de l'outil de moulage par injection servant de gabarit de cintrage (50).

10. Procédé selon l'une des revendications 7 à 9, **caractérisé en ce qu'**on utilise comme outil de moulage par injection (42) un outil à étages dans lequel sont fabriqués simultanément plusieurs grilles (10 ; 64).
